# EUROPEAN PATENT APPLICATION

(11) **EP 4 582 266 A1**
(43) Date of publication of application: **09.07.2025**
(21) Application number: 23860546.3
(22) Date of filing: 01.09.2023
(51) Int. Cl.: B44C 1/17, B32B 27/00, B32B 27/40, C08J 7/04

(54) **COATING SHEET AND METHOD FOR FORMING COATING**

(30) Priority: 02.09.2022 JP 2022140243
(71) Applicant: SEKISUI CHEMICAL CO., LTD., Osaka-shi Osaka 530-8565 (JP)
(72) Inventor: YASUI, Hidefumi, Mishima-gun, Osaka 618-0021 (JP); NAKADATE, Junichi, Mishima-gun, Osaka 618-0021 (JP)
(74) Representative: Ter Meer Steinmeister & Partner
(86) International application number: PCT/JP2023/032122
(87) International publication number: WO 2024/048786

(57) **Abstract**

The coating sheet of the present invention includes a transfer layer and a coating layer composed of a thermosetting resin composition, wherein the indentation modulus of the coating layer obtained by the nanoindentation method upon thermally curing at 160°C for 1 hour is 2.0 GPa or more and 3.5 GPa or less, and the tensile elongations at break in MD and TD at 100°C are 70% or more and 1,500% or less. The present invention can provide a coating sheet that has excellent vacuum formability and wear resistance.

## Description

### Technical Field

The present invention relates to a coating sheet, and a method for forming a coating using the coating sheet.

### Background Art

Conventionally, coatings have been applied to various products such as furniture, steel sheets, and vehicle bodies to impart functions such as aesthetic quality, durability, weather resistance, and wear resistance.

The use of decorative films is also known as a method for imparting a function. However, when the decorative film has low flexibility, it tends to have poor vacuum formability, such as poor shape conformability and uneven coloring during vacuum forming. And when it is flexible enough to have good vacuum formability, it tends to have low hardness and poor wear resistance after forming. There is thus a need for a coating sheet with good vacuum formability and high hardness.

Patent Literature 1 discloses an invention regarding a thermosetting sheet for coating which contains an acrylic resin that has a weight-average molecular weight of 100,000 to 1,000,000, is in solid form, and has at least a plurality of functional groups; a monomer that has a plurality of functional groups as cross-linking agents reacting with isocyanate groups; and a blocked isocyanate as the main components. It is described that using the thermosetting sheet for coating allows to form a film that has high hardness and is wrinkle-free.

### Citation List

### Patent Literature

PTL1: JP 2688105 B

### Summary of Invention

### Technical Problem

Meanwhile, vacuum forming is known as a method for attaching the thermosetting sheet for coating to various products such as vehicle bodies.

The thermosetting sheet for coating described in Patent Literature 1 above can easily form a film that has high hardness and is wrinkle-free when vacuum-forming against small parts, but against large parts, there was a problem that the center of the sheet deflects, resulting in poor shape conformability and rupture of the sheet, when the thermosetting sheet for coating is clamped to a vacuum forming machine.

Therefore, the object of the present invention is to provide a coating sheet that has excellent vacuum formability and wear resistance.

### Solution to Problem

The present inventors have conducted diligent studies to solve the above problem. As a result, they have found that the above problem can be solved by a coating sheet including a transfer layer and a coating layer composed of a thermosetting resin composition, wherein the indentation modulus of the coating layer obtained by the nanoindentation method upon thermally curing at 160°C for 1 hour is within a certain range, and the tensile elongations at break in MD and TD at 100°C are within a certain range, thereby accomplishing the present invention.

Specifically, the present invention is the following [1] to [7].
[1] A coating sheet, comprising a transfer layer and a coating layer comprising a thermosetting resin composition, the coating layer having an indentation modulus obtained by nanoindentation method upon thermally curing at 160°C for 1 hour of 2.0 GPa or more and 3.5 GPa or less, and the coating sheet having tensile elongations at break in MD and TD at 100°C of 70% or more and 1,500% or less.
[2] The coating sheet according to the above [1], wherein the thermosetting resin composition comprises a (meth)acrylic resin (A) and a blocked isocyanate (B).
[3] The coating sheet according to the above [2], wherein the (meth)acrylic resin (A) comprises a (meth)acrylic resin that has a weight-average molecular weight of 50,000 or more and 1,000,000 or less, is in solid form, and has a plurality of functional groups.
[4] The coating sheet according to the above [2] or [3], wherein the (meth)acrylic resin (A) is a (meth)acrylic polyol.
[5] The coating sheet according to any one of the above [1] to [4], wherein the coating layer comprises a clear layer and a pigment layer.
[6] A method for forming a coating, wherein the coating sheet according to any one of the above [1] to [5] is attached to an object to be coated and then the coating layer is cured to form the coating.
[7] The method for forming a coating according to the above [6], wherein the transfer layer is peeled off from the coating layer to remove the transfer layer from the object to be coated.

### Advantageous Effects of Invention

The present invention can provide a coating sheet that has excellent vacuum formability and wear resistance.

### Brief Description of Drawings

[Fig. 1] Fig. 1 is a schematic cross-sectional view showing an example of the coating sheet.
[Fig. 2] Fig. 2 is a schematic cross-sectional view showing an example of the coating sheet.
[Fig. 3] Fig. 3 is a schematic cross-sectional view showing an example of the coating sheet.
[Fig. 4] Fig. 4 is a schematic view of a device to perform TOM forming.

### Description of Embodiments

### [Coating sheet]

The coating sheet of the present invention includes a transfer layer and a coating layer composed of a thermosetting resin composition, wherein the indentation modulus of the coating layer obtained by the nanoindentation method upon thermally curing at 160°C for 1 hour is 2.0 GPa or more and 3.5 GPa or less, and the tensile elongations at break in MD and TD at 100°C are 70% or more and 1,500% or less. The tensile elongation at break is the tensile elongation at break of the coating sheet.

### <Indentation modulus>

The coating layer in the coating sheet of the present invention has an indentation modulus obtained by the nanoindentation method upon thermally curing at 160°C for 1 hour of 2.0 GPa or more and 3.5 GPa or less. The indentation modulus is the indentation modulus for the surface on the transfer layer side of the coating layer (the surface of the coating layer on which the transfer layer is provided).

When the above indentation modulus is less than 2.0 GPa, the hardness after curing the coating layer, i.e., after coating, is too low, resulting in poor wear resistance. On the other hand, when the above indentation modulus exceeds 3.5 GPa, the flexibility of the coating layer is too low, resulting in poor vacuum formability.

The above indentation modulus is preferably 2.5 GPa or more and 3.5 GPa or less, and more preferably 2.7 GPa or more and 3.5 GPa or less.

The indentation modulus can be adjusted by the composition of the thermosetting resin composition that forms the coating layer. For example, increasing the molecular weight of the resin contained in the thermosetting resin composition allows to increase the indentation modulus.

The indentation modulus by the nanoindentation method is determined from the load-displacement curve obtained by pressing an indenter into an object to be measured at a small load. Details of the method for measuring the indentation modulus are as described in the Examples.

### <Tensile elongation at break>

The tensile elongations at break in MD and TD at 100°C of the coating sheet of the present invention are each 70% or more and 1,500% or less. When either one of the tensile elongations at break in MD and TD at 100°C is lower than 70%, the coating sheet will not conform to the shape when attempting to attach it to a jig of a predetermined shape or the object to be coated by vacuum forming or the like, and will be prone to breakage, wrinkling, and the like. When either one of the tensile elongations at break in MD and TD at 100°C exceeds 1,500%, the flexibility of the coating layer will be too high, resulting in poor vacuum formability.

The tensile elongations at break in MD and TD at 100°C of the coating sheet are each preferably 80% or more and 1,200% or less, more preferably 100% or more and 600% or less, and even more preferably 330% or more and 500% or less.

MD stands for Machine Direction, and means the longitudinal direction of the coating sheet. TD stands for Transverse Direction, and means the width direction of the coating sheet.

The tensile elongation at break of the coating sheet is the elongation at the break point measured in a tensile test, and can be measured by a measurement method in accordance with JIS K7127. The tensile elongation at break of the coating sheet can be adjusted by the type of resin constituting the transfer layer, whether the resin film constituting the transfer layer is stretched or not, the degree of stretching, the composition of the thermosetting resin composition that forms the coating layer, and the like.

From the viewpoint of increasing the tensile elongation at break, the resin film constituting the transfer layer is preferably a resin film with a low stretching ratio, and more preferably a non-stretched film. In addition, the transfer layer is preferably formed by a thermoplastic resin.

### <Coating layer>

The coating sheet of the present invention includes a coating layer composed of a thermosetting resin composition. Specifically, the coating layer is formed by drying a thermosetting resin composition, for example.

The thermosetting resin composition contains a curable resin that is cured by heat, and preferably contains a (meth)acrylic resin (A) and a blocked isocyanate (B). The thermosetting resin composition containing these components can be applied, for example, to the transfer layer or the like and dried to form the coating layer.

### ((Meth)acrylic resin (A))

Examples of the (meth)acrylic resin (A) include a (meth)acrylic resin having a plurality of functional groups. The functional group is a group that can react by heat. Examples of the functional group preferably include functional groups that react with the functional groups (e.g., isocyanate group) contained in the curing agent described below, and specifically, a hydroxy group, an amino group, and a carboxyl group. The (meth)acrylic resin may have only one functional group, or may have two or more functional groups. Of these, the (meth)acrylic resin preferably has a hydroxy group.

Therefore, the (meth)acrylic resin (A) is preferably a (meth)acrylic polyol having a plurality of hydroxy groups.

The (meth)acrylic resin is preferably an acrylic polymer obtained by polymerizing a monomer mixture containing (meth)acrylic ester monomers and functional group-containing monomers having the above functional groups such as a hydroxy group, an amino group, or a carboxyl group. Such acrylic polymer allows to incorporate functional groups in the acrylic polymer via the functional group-containing monomers. The monomer mixture may also contain (meth)acrylic ester monomers such as styrene derivative monomers and monomers other than functional group-containing monomers. (Meth)acrylic means methacrylic or acrylic, and the same applies to other similar terms.

Examples of the above (meth)acrylic ester monomer include (meth)acrylic ester monomers that do not have the above functional groups, which include alkyl (meth)acrylates in which the alkyl group has 1 or more and 18 or less carbon atoms, such as methyl (meth)acrylate, ethyl (meth)acrylate, and 2-ethoxyethyl (meth)acrylate, (meth)acrylates having an aromatic ring, such as benzyl (meth)acrylate and phenoxy diethylene glycol (meth)acrylate, and 2-ethoxyethyl (meth)acrylate.

Examples of functional group-containing monomers include hydroxy group-containing monomers, amino group-containing monomers, and carboxyl group-containing monomers. These may be used alone, or two or more may be used in combination. Of the above, the functional group-containing monomer is preferably a hydroxy group-containing monomer. Furthermore, the above (meth)acrylic polyol can be obtained by polymerizing a monomer mixture containing (meth)acrylic ester monomers and hydroxy group-containing monomers.

The above hydroxy group-containing monomer is not particularly limited, and examples thereof include (meth)acrylic ester monomers having a hydroxy group, such as 2-hydroxyethyl (meth)acrylate. The amino group-containing monomer is not particularly limited, and examples thereof include (meth)acrylic ester monomers having an amino group, such as 2-aminoethyl (meth)acrylate. The carboxyl group-containing monomer is not particularly limited, and examples thereof include (meth)acrylic acid.

The styrene derivative monomer is not particularly limited, and examples thereof include styrene, α-methylstyrene, α-ethylstyrene, p-methylstyrene, p-methoxystyrene, p-phenylstyrene, p-ethoxystyrene, p-chlorostyrene, m-chlorostyrene, and o-chlorostyrene.

The (meth)acrylic resin may also be a copolymer obtained by block or graft polymerization of the acrylic polymer described above and another monomer or polymer. In this case, examples of the other monomer or polymer include acrylic, styrene-based, maleic acid-based, imide-based, silicone-based, and fluorinated monomers, or polymers of these monomers.

Furthermore, the functional group of the acrylic polymer obtained by polymerizing a monomer mixture containing (meth)acrylic ester monomers and functional group-containing monomers, may be reacted with a (meth)acryloyl group-containing compound having a reactive group capable of reacting with the functional group, and a (meth)acryloyl group to incorporate a (meth)acryloyl group into the acrylic polymer.

The thermosetting resin composition preferably contains, as the above (meth)acrylic resin, a (meth)acrylic resin that has a weight-average molecular weight (Mw) of 50,000 or more and 1,000,000, or less, is in solid form, and has a plurality of functional groups (hereinafter referred to as (meth)acrylic resin (A1)). When the (meth)acrylic resin (A1) has a weight-average molecular weight within the above range and is in solid form, the coating layer more readily retains a certain shape even before curing and is more easily formed appropriately on the transfer layer. It is also easier to impart tackiness, extensibility, and the like to the coating layer. When the coating layer has tackiness and extensibility, the shape conformability when vacuum forming enhances and uneven coloring is less likely to occur, thus enhancing vacuum formability. Furthermore, when the weight-average molecular weight is within the above range, the hardness of the coating layer after curing is more easily increased, and the indentation modulus is more easily adjusted to the desired range described above.

From the above viewpoint, the weight-average molecular weight of the (meth)acrylic resin (A1) is preferably 100,000 or more and 500,000 or less, and more preferably 120,000 or more and 400,000 or less.

In the present specification, the weight-average molecular weight (Mw) is measured by gel permeation chromatography (GPC) and is obtained as a value in terms of standard polystyrene. In addition, being in solid form means being solid at normal temperature (23°C) and normal pressure (1 atm).

The glass transition temperature (Tg) of the (meth)acrylic resin (A1) is preferably less than 90°C, more preferably 80°C or less, even more preferably 60°C or less, and preferably 0°C or more, more preferably 10°C or more. When the glass transition temperature of the (meth)acrylic resin (A1) is within the above range, it is easier to impart a certain tackiness and extensibility to the coating layer.

In the present specification, the glass transition temperature is a value obtained by differential scanning calorimetry (DSC) in accordance with JIS K 7121.

The high molecular weight (meth)acrylic resin (A1) described above is preferably a (meth)acrylic polyol having a plurality of hydroxy groups (hereinafter also referred to as (meth)acrylic polyol (a1)).

As described above, the (meth)acrylic polyol (a1) can be obtained, for example, by polymerizing a monomer mixture containing (meth)acrylic ester monomers and hydroxy group-containing monomers.

The hydroxyl value of the (meth)acrylic polyol (a1) is preferably 20 mg KOH/g or more and 200 mg KOH/g or less, more preferably 60 mg KOH/g or more and 180 mg KOH/g or less, and even more preferably 100 mg KOH/g or more and 150 mg KOH/g or less. When the hydroxyl value is within the above range, the curability is enhanced, and the coating layer more easily achieves high hardness after curing. The hydroxyl value can be measured in accordance with JISK1557-1:2007.

The thermosetting resin composition preferably contains, as the (meth)acrylic resin (A), a (meth)acrylic resin whose weight-average molecular weight is less than 50,000 (hereinafter also referred to as (meth)acrylic resin (A2)), in addition to the (meth)acrylic resin (A1).

When the thermosetting resin composition contains a (meth)acrylic resin (A2) with a low weight-average molecular weight in addition to the high molecular weight (meth)acrylic resin (A1), the coatability of the thermosetting resin composition, the curability, tackiness, extensibility, and the like of the coating layer are more easily enhanced in a balanced manner. The weight-average molecular weight of the (meth)acrylic resin (A2) is preferably 500 or more and 30,000 or less, and more preferably 1,000 or more and 20,000 or less.

The glass transition temperature of the low molecular weight (meth)acrylic resin (A2) described above is not particularly limited, but is preferably less than 0°C, more preferably - 20°C or less, even more preferably -40°C or less, and preferably -120°C or more, more preferably -100°C or more, and even more preferably -80°C or more. When the glass transition temperature of the low molecular weight (meth)acrylic resin (a) is within the above range, the tensile elongation at break of the coating layer is more easily adjusted to a desired range, and tackiness is also more easily exhibited.

The (meth)acrylic resin (A2) with a low weight-average molecular weight is preferably a (meth)acrylic polyol having a plurality of hydroxy groups (hereinafter also referred to as (meth)acrylic polyol (a2)).

The hydroxyl value of the (meth)acrylic polyol (a2) is preferably 20 mg KOH/g or more and 250 mg KOH/g or less, and more preferably 50 mg KOH/g or more and 200 mg KOH/g or less. When the hydroxyl value is within the above range, the tackiness and the like are enhanced.

The content of the (meth)acrylic resin (A) in the coating layer is not particularly limited, but is, for example, 30 mass% or more, preferably 40 mass% or more, and preferably 90 mass% or less, more preferably 80 mass% or less, based on the total amount of the thermosetting resin composition.

In the present specification, to be based on the total amount of the thermosetting resin composition means considering the total amount of the components minus the solvent as 100 mass%, when the thermosetting resin composition contains a solvent. That is, to be based on the total amount of the thermosetting resin composition means to be based on the total amount of solids of the thermosetting resin composition.

### (Blocked isocyanate (B))

The thermosetting resin composition of the present invention contains a curing agent to cure the curable resin that is cured by heat, and preferably contains a blocked isocyanate (B). That is, the thermosetting resin composition of the present invention preferably contains, in one embodiment, a (meth)acrylic resin (A) and a blocked isocyanate (B).

The blocked isocyanate (B) is a compound in which an isocyanate group is blocked by a protective group. Upon exposure to high temperatures, the protective group (blocked portion) comes off by thermal dissociation, and a curing reaction occurs between the isocyanate group generated and the (meth)acrylic polyol described above.

The blocked isocyanate (B) can be obtained, for example, by reacting an isocyanate compound having two or more isocyanate groups per molecule with a blocking agent.

The isocyanate compound having two or more isocyanate groups per molecule described above is not particularly limited, but examples thereof include tolylene diisocyanate, diphenylmethane diisocyanate, hexamethylene diisocyanate, pentamethylene diisocyanate, isophorone diisocyanate, xylylene diisocyanate, hydrogenated xylylene diisocyanate, and the modified forms thereof.

Examples of the blocking agent include pyrazoles, phenols, oximes, lactams, and malonic esters.

As for the blending amount of the blocked isocyanate (B) in the thermosetting resin composition, the ratio of the number of functional groups in the (meth)acrylic polyol to the number of isocyanate groups in the blocked isocyanate (B) (number of functional groups/number of isocyanate groups) is preferably 0.4 or more and 1.8 or less, and more preferably 0.6 or more and 1.5 or less.

The blending amount of the blocked isocyanate (B) per 100 parts by mass of the (meth)acrylic resin (A) is preferably 10 parts by mass or more and 200 parts by mass or less, and more preferably 30 parts by mass or more and 150 parts by mass or less.

### <Pigment>

The thermosetting resin composition may contain a pigment (C). By incorporating a pigment (C) in the thermosetting resin composition, the coating layer can be colored and the aesthetic quality enhanced.

Examples of the pigment (C) include, but are not limited to, metal oxide pigments such as titanium dioxide and iron oxide; inorganic pigments such as carbon black, clay, kaolin, barium sulfate, barium carbonate, calcium carbonate, talc, silica, and white alumina; and organic pigments such as azo pigments, quinacridone pigments, diketopyrrolopyrrole pigments, perylene pigments, perinone pigments, benzimidazolone pigments, vat pigments, isoindoline pigments, isoindolinone pigments, azo-metal chelate pigments, phthalocyanine pigments, indanthrone pigments, dioxane pigments, and indigo pigments.

### <Glitter material (D)>

The thermosetting resin composition may contain a glitter material (D). The glitter material (D) is a compound that can impart glitter to the coating layer, i.e., a compound that can impart a property that exhibits luster even when observed from a variety of angles. The glitter material (D) is not particularly limited, but examples thereof include compounds with a titanium dioxide layer provided on the surface of natural mica, synthetic mica, alumina flakes, glass flakes, and the like.

### <Clear layer and pigment layer>

The coating layer in the present invention preferably includes a clear layer and a pigment layer. More specifically, in the coating sheet of the present invention, the transfer layer, clear layer, and pigment layer are preferably laminated in this order. Using such a layer configuration and adjusting the composition of each layer allows to obtain a coating sheet with excellent vacuum formability and hardness after coating, as well as enhanced aesthetic quality.

The pigment layer is a layer containing the pigment (C) described above, and in particular, it is preferably a layer containing the pigment (C) and the glitter material (D).

The pigment layer is an opaque layer and the clear layer is a transparent layer. Here, transparent means that the transmittance of light at a wavelength of 450 nm is 80% or more.

### (Thermosetting resin composition (X) for forming clear layer)

The clear layer is a layer formed by a thermosetting resin composition. Hereinafter, the thermosetting resin composition for forming the clear layer is also sometimes referred to as the thermosetting resin composition (X).

The thermosetting resin composition (X) preferably contains the (meth)acrylic resin (A) and blocked isocyanate (B) described above.

The (meth)acrylic resin (A) is preferably the (meth)acrylic resin (A1) described above. When the thermosetting resin composition (X) contains the (meth)acrylic resin (A1), the vacuum formability of the coating sheet is enhanced and the hardness of the coating layer after curing is more easily increased.

The suitable weight-average molecular weight and glass transition temperature of the (meth)acrylic resin (A1) are as described above. Furthermore, the (meth)acrylic resin (A1) is preferably the (meth)acrylic polyol (a1) described above. The suitable hydroxyl values of the (meth)acrylic polyol (a1) are as described above.

The content of the (meth)acrylic resin (A) in the thermosetting resin composition (X) is not particularly limited, but is, for example, 30 mass% or more, preferably 40 mass% or more, and preferably 90 mass% or less, more preferably 80 mass% or less, based on the total amount of the thermosetting resin composition (X).

As for the blending amount of the blocked isocyanate (B) in the thermosetting resin composition (X), the ratio of the number of functional groups in the (meth)acrylic polyol to the number of isocyanate groups in the blocked isocyanate (B) (number of functional groups/number of isocyanate groups) is preferably 0.4 or more and 1.8 or less, and more preferably 0.6 or more and 1.5 or less.

The blending amount of the blocked isocyanate (B) per 100 parts by mass of the (meth)acrylic resin (A) in the thermosetting resin composition (X) is preferably 10 parts by mass or more and 200 parts by mass or less, and more preferably 30 parts by mass or more and 150 parts by mass or less.

The thermosetting resin composition (X) may contain an inorganic filler such as silica, as long as it does not impair the transparency of the clear layer.

In addition, the thermosetting resin composition (X) may contain a pigment as long as it does not impair the transparency of the clear layer, but the content of the pigment is, for example, less than 1 mass%, and preferably 0.5 mass% or less, based on the total amount of the thermosetting resin composition (X). In addition, the content of the pigment may also be 0 mass% based on the total amount of the thermosetting resin composition (X).

The thickness of the clear layer is not particularly limited, but is, for example, 5 µm or more and 1,000 µm or less, preferably 20 µm or more and 500 µm or less.

### (Thermosetting resin composition (Y) for forming pigment layer)

The pigment layer is a layer formed by a thermosetting resin composition. Hereinafter, the thermosetting resin composition for forming the pigment layer is also sometimes referred to as the thermosetting resin composition (Y).

The thermosetting resin composition (Y) preferably contains the (meth)acrylic resin (A), blocked isocyanate (B), and pigment (C) described above.

The (meth)acrylic resin (A) preferably includes both the (meth)acrylic resin (A1) and (meth)acrylic resin (A2) described above.

When the thermosetting resin composition (Y) contains the (meth)acrylic resin (A1), the vacuum formability of the coating sheet is enhanced and the hardness of the coating layer after curing is more easily increased. In addition, when the thermosetting resin composition (Y) contains the (meth)acrylic resin (A2), the tackiness to the object to be coated (various products) is enhanced, making the coating less likely to be detached.

From the viewpoint of enhancing vacuum formability, hardness, and tackiness in a balanced manner, the mass ratio of the (meth)acrylic resin (A1) to the (meth)acrylic resin (A2) [(meth)acrylic resin (A1)/(meth)acrylic resin (A2)] is preferably 0.5 to 10, more preferably 1 to 5, and even more preferably 1.2 to 3.

The suitable weight-average molecular weights and glass transition temperatures of the (meth)acrylic resin (A1) and (meth)acrylic resin (A2) are as described above. Furthermore, the (meth)acrylic resin (A1) is preferably the (meth)acrylic polyol (a1) described above, and the (meth)acrylic resin (A2) is preferably the (meth)acrylic polyol (a2) described above. The suitable hydroxyl values of the (meth)acrylic polyol (a1) and (meth)acrylic polyol (a2) are as described above.

The content of the (meth)acrylic resin (A) in the thermosetting resin composition (Y) is not particularly limited, but is, for example, 30 mass% or more, preferably 40 mass% or more, and preferably 85 mass% or less, more preferably 80 mass% or less, based on the total amount of the thermosetting resin composition (Y).

As for the blending amount of the blocked isocyanate (B) in the thermosetting resin composition (Y), the ratio of the number of functional groups in the (meth)acrylic polyol to the number of isocyanate groups in the blocked isocyanate (B) (number of functional groups/number of isocyanate groups) is preferably 0.4 or more and 1.8 or less, and more preferably 0.6 or more and 1.5 or less.

The blending amount of the blocked isocyanate (B) per 100 parts by mass of the (meth)acrylic resin (A) in the thermosetting resin composition (Y) is preferably 10 parts by mass or more and 200 parts by mass or less, and more preferably 30 parts by mass or more and 100 parts by mass or less.

The pigment layer contains the pigment (C) described above. This allows to color the pigment layer and enhance the aesthetic quality of the coating. The content of the pigment (C) in the pigment layer is, for example, 0.5 mass% or more, preferably 1 mass% or more, more preferably 2 mass% or more, and preferably 25 mass% or less, more preferably 15 mass% or less, based on the total amount of the thermosetting resin composition (Y).

The pigment layer preferably contains the glitter material (D) described above. This allows to impart glitter to the pigment layer and enhance the aesthetic quality of the coating. The content of the glitter material (D) in the pigment layer is, for example, 0.1 mass% or more, preferably 0.5 mass% or more, more preferably 1.5 mass% or more, and preferably 5 mass% or less, more preferably 3 mass% or less, based on the total amount of the thermosetting resin composition (Y).

The thickness of the pigment layer is not particularly limited, but is, for example, 5 µm or more and 1,000 µm or less, preferably 20 µm or more and 500 µm or less.

The pigment (C) and glitter material (D) described above may be blended in separate layers. For example, the pigment layer may be a layer including a first colored layer containing the pigment (C) and a second colored layer containing the glitter material (D). More specifically, it may be a coating sheet in which the transfer layer, clear layer, first colored layer containing the pigment (C), and second colored layer containing the glitter material (D) are laminated in this order, or a coating sheet in which the transfer layer, clear layer, second colored layer containing the glitter material (D), and first colored layer containing the pigment (C) are laminated in this order.

In this case, the first colored layer can be formed by a thermosetting resin composition (Y) containing the (meth)acrylic resin (A), the blocked isocyanate (B), and the pigment (C). Furthermore, the second colored layer can be formed by a thermosetting resin composition (Y) containing the (meth)acrylic resin (A), blocked isocyanate (B), and glitter material (D).

The thermosetting resin composition described above preferably contains a solvent from the viewpoint of enhancing work efficiency such as coatability. Examples of the solvent include ethyl acetate, butyl acetate, and toluene, but ethyl acetate is preferred from the viewpoint of work efficiency. The amount of solvent used is not particularly limited, but is, for example, 50 parts by mass or more and 1,000 parts by mass or less, and preferably about 100 parts by mass or more and 500 parts by mass or less per 100 parts by mass of (meth)acrylic resin.

The thermosetting resin composition preferably contains a urethanization catalyst to catalyze the reaction between the (meth)acrylic polyol and the blocked isocyanate.

In addition, the thermosetting resin composition may contain a component other than the above, and for example, may contain an additive other than the above. Examples of additives include cross-linking agents, dispersants, inorganic fillers other than pigments and glitter materials, age resistors, antioxidants, and anti-rust agents.

### <Transfer layer>

The coating sheet of the present invention includes a transfer layer. When the coating sheet does not include a transfer layer, the vacuum formability is reduced when the object to be coated is a large part, and handleability is also reduced.

The transfer layer is preferably formed by a resin film. Examples of the resin used in the resin film include thermoplastic resins, and specifically cyclic polyolefin resins, polyolefin resins, polyester resins, polyamide resins, polycarbonate resins, acrylic resins, fluororesins, flexible polyvinyl chloride resins, polymethylpentene resins, and tetrafluoroethylene resins. Of these, cyclic polyolefin resins and polyolefin resins are preferred.

Cyclic polyolefin resins are polymers containing structural units derived from cyclic olefins. Examples of cyclic olefins include tetracyclododecene, norbornene, and cyclic conjugated diene. The cyclic polyolefin resin may be a polymer of a cyclic olefin, a copolymer of a cyclic olefin and an α-olefin, or a hydrogenated product thereof. Examples of the above α-olefin include chain α-olefins having about 1 or more and 12 or less carbon atoms, such as ethylene, propylene, butene-1, pentene-1, hexene-1, heptene-1, and octene-1, of which ethylene is preferred.

The polyolefin resin is a polyolefin resin other than a cyclic polyolefin resin, and specific examples include polypropylene resins and polyethylene resins. Of these, polyethylene resins are preferred.

The polypropylene resin may be homopropylene, or a copolymer of a propylene, such as random polypropylene, and a small amount (e.g., 10 mass% or less) of another α-olefin. Examples of other α-olefins include chain α-olefins having 1 or more and 12 or less carbon atoms, such as ethylene, 1-butene, 1-pentene, 4-methyl-1-pentene, 1-hexene, 1-octene, 1-nonene, and 1-decene.

Examples of polyethylene resins include low-density polyethylene (LDPE, density: less than 0.930 g/cm³), medium-density polyethylene (MDPE, density: 0.930 g/cm³ or more and less than 0.942 g/cm³), high-density polyethylene (HDPE, density: 0.942 g/cm³ or more), and linear low-density polyethylene (LLDPE).

The Young's modulus at 25°C of the resin film used as the transfer layer is preferably 50 MPa or more and 300 MPa or less, and more preferably 70 MPa or more and 240 MPa or less.

The resin film used as the transfer layer may be a monolayer film consisting of one single layer, or a multilayer film including two or more layers. In the resin film constituting the transfer layer, the resin contained in the resin film may be used alone, or two or more thereof may be used in combination. When two or more resins are used in combination, a different type of resin may be used in each layer to form a multilayer film. A mixture of two or more resins may be used to form a monolayer film or one or more layers in a multilayer film.

Each layer in the transfer layer may contain additives in addition to the resin. The additives should be known additives for blending in resin films. Specific examples of additives include crystal nucleating agents, fluorescent brightening agents, antioxidants, stabilizers, ultraviolet absorbers, surfactants, lubricants, fillers, cross-linking agents, cross-linking promoters, antistatic agents, fire retardants, dispersants, pigments, dyes, and processing aids.

The resin film may be a stretched resin film, or a non-stretched resin film that is not stretched, but is preferably a non-stretched resin film from the viewpoint of enhancing vacuum formability.

The transfer layer may have undergone a surface treatment, and may have at least one surface that has undergone a mold release treatment with a mold release agent such as a silicone-based mold release agent or a fluorine-based release agent. When the transfer layer has undergone a mold release treatment, the treated surface preferably constitutes the surface on the coating layer side. By undergoing a mold release treatment, the transfer layer has enhanced peelability from the coating layer.

The thickness of the transfer layer is not particularly limited, but is, for example, 30 µm or more and 300 µm or less, preferably 50 µm or more and 200 µm or less.

### [Layer configuration]

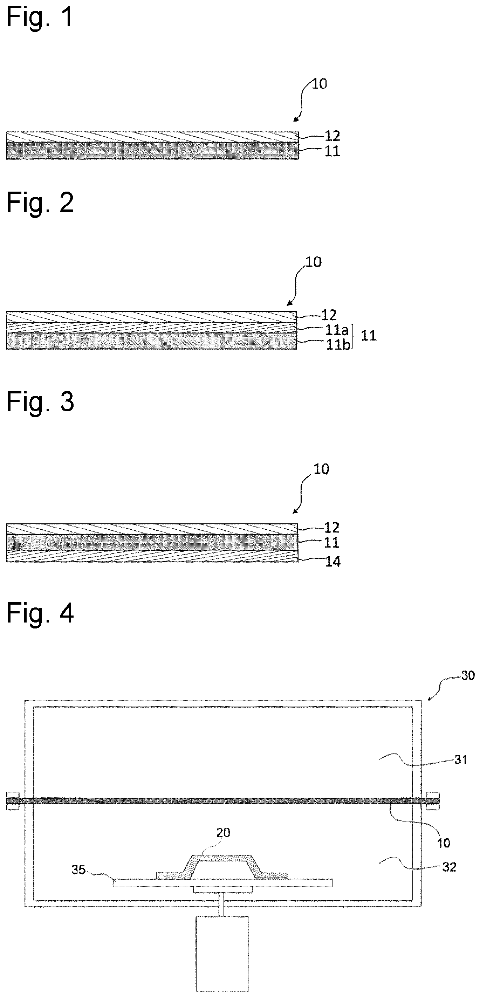

As shown in Fig. 1, the coating sheet 10, for example, includes a coating layer 11 and a transfer layer 12, where the coating layer 11 is formed on one side of the transfer layer 12 and these are integrated. The coating layer 11 should be laminated directly on top of the transfer layer 12. Although not shown, a mold release film may be provided on the surface of the coating layer 11. A resin film can be used as the mold release film, and the surface that comes into contact with the coating layer 11 may have undergone a mold release treatment. The mold release film should be removed from the coating sheet before forming the coating sheet 10.

In addition, the coating layer 11 preferably includes a clear layer 11a and a pigment layer 11b as shown in Fig. 2, in which case the coating sheet 10 is a laminated body in which the transfer layer 12, clear layer 11a, and pigment layer 11b are laminated in this order. Although not shown, the pigment layer 11b may be composed of two layers, a first colored layer containing the pigment (C) and a second colored layer containing the glitter material (D).

The coating sheet 10 is used by attaching it to the object to be coated, for example, by vacuum forming. The coating sheet 10 of the present invention has good shape conformability in vacuum forming, making it easy to form it into a predetermined shape.

The transfer layer is removed after the coating sheet 10 has been attached to the object to be coated. Therefore, the coating layer 11 is positioned on the surface of the object to be coated. The hardness of the coating layer 11 is high after being thermally cured, which also enhances wear resistance. Thus, the transfer layer is used to transfer the coating layer to the object to be coated, such as a car body.

### <Method for producing coating sheet>

The method for producing the coating sheet in the present invention is not particularly limited, but it is preferable to produce it by preparing the thermosetting resin composition described above, applying it on a transfer layer composed of a resin film or the like, and then drying it. This allows to obtain a coating sheet including a transfer layer and a coating layer.

In the case of a coating sheet in which the coating layer includes a clear layer and a pigment layer as shown in Fig. 2, the sheet should be produced as follows.

First, a thermosetting resin composition (X) for forming the clear layer is prepared, applied on a transfer layer composed of a resin film or the like, and then dried. This allows to obtain a laminated body including a transfer layer and a clear layer. Next, a thermosetting resin composition (Y) for forming the pigment layer is prepared, applied on a mold release film such as a mold release polyethylene terephthalate film (mold release PET film), and then dried to form a pigment layer on the mold release film. The pigment layer is then peeled off from the mold release film and laminated on the clear layer of the laminated body of the transfer layer and the clear layer prepared as described above. This allows to obtain a coating sheet in which the transfer layer, clear layer, and pigment layer are laminated in this order.

In addition, a coating sheet in which the coating layer includes a clear layer and a pigment layer as shown in Fig. 2 can also be produced as follows.

As described above, a thermosetting resin composition (X) for forming the clear layer is prepared, applied on a transfer layer composed of a resin film or the like, and then dried to obtain a laminated body including a transfer layer and a clear layer. Next, a thermosetting resin composition (Y) for forming the pigment layer is prepared, applied on a mold release film such as a mold release polyethylene terephthalate film (mold release PET film), and then dried to form a pigment layer on the mold release film and obtain a laminated body of the pigment layer and the mold release PET film. Next, the laminated body of the pigment layer and the mold release PET film is laminated on the surface of the clear layer of the laminated body of the transfer layer and the clear layer described above to obtain a laminated body in which the transfer layer, clear layer, pigment layer, and mold release PET film are laminated in this order. A coating sheet in which the transfer layer, clear layer, and pigment layer are laminated in this order is obtained by peeling off the mold release PET film from this laminated body.

The drying performed after applying the thermosetting resin composition on the transfer layer or mold release film is preferably a drying that includes at least the main drying step described below, and more preferably a drying in which the pre-drying step and main drying step described below are performed in this order.

The drying temperature in the pre-drying step is preferably 50°C or more and 70°C or less, and more preferably 55°C or more and 65°C or less. The drying time in the pre-drying step is preferably 1 minute or more and 30 minutes or less, and more preferably 2 minutes or more and 15 minutes or less.

The drying temperature in the main drying step is preferably 85°C or more and 130°C or less, and more preferably 90°C or more and 120°C or less. When the drying temperature is these lower limit values or more, the solvent is more readily appropriately removed, which prevents bubbles from being generated due to the vaporization of the solvent and the like when curing the coating layer. When the drying temperature is the above upper limit values or less, the thermosetting resin composition can be prevented from being cured more than necessary when drying.

The drying time in the main drying step is preferably 1 minute or more and 30 minutes or less, and more preferably 2 minutes or more and 15 minutes or less. When the drying time is the above lower limit values or more, the solvent is more readily appropriately removed, which prevents bubbles from being generated due to the vaporization of the solvent when curing the coating layer or the like. When the drying temperature is the above upper limit values or less, the thermosetting resin composition can be prevented from being cured more than necessary when drying.

Initial curing may also be performed on the coating sheet after drying, as necessary. Initial curing refers to the curing of the thermosetting resin composition constituting the coating layer to a semi-cured state. The initial curing can be performed by heating, and should be performed with a heating temperature of 90°C or more and 150°C or less and a heating time of 2 minutes or more and 5 minutes or less.

### (Method for using coating sheet)

The coating sheet in the present invention is used to form a coating on various articles (objects to be coated). Specifically, after attaching the coating sheet to various objects to be coated, the coating layer should be cured, and the cured coating layer may be used as a coating. The transfer layer should be peeled off from the coating layer attached to the object to be coated to be removed from the object to be coated.

The object to be coated which is coated by the coating sheet is not particularly limited, but examples thereof include electrical appliances, interior materials for vehicles, such as automobile and railway vehicle interior materials, exterior materials for vehicles, such as automobile and railway vehicle exterior materials, exterior materials for miscellaneous goods, heavy machinery, ships, and aircrafts, exterior wall and roofing materials for houses and buildings, bridges, steel frames, plants, and wind turbine blades. Of these, exterior materials for vehicles such as automobile exterior materials are preferred. Examples of exterior materials for vehicles include hoods, roofs, door panels, bumpers, fuel neck filler panels, trunk lids, and rear gates. When attached to exterior materials for vehicles, the coating sheet may be attached to the exterior material attached to the vehicle body or to the exterior material before it is attached to the vehicle body.

The material of the object to be coated is not particularly limited, and may be any of a resin material, inorganic material such as ceramic, or metallic material such as steel, but of these, a metallic material such as steel is preferred. Metallic materials such as steel are difficult to coat with resin sheets as it is difficult to coat them at the same time as the object to be coated is formed by insert molding. However, by using the coating sheet of the present invention, such materials can also be easily coated.

The method for attaching the coating sheet to the object to be coated is not particularly limited, and the coating sheet may be directly attached to the object to be coated by vacuum forming or the like, or it may be first formed to conform to the surface shape of the object to be coated by preforming, before attaching the formed coating sheet to the object to be coated.

The preforming is preferably done with the support layer 14 attached to the coating layer 11 as shown in Fig. 3. Preforming is done by using a jig to form the coating sheet into a certain shape, but preforming the coating sheet with a support layer allows to prevent the coating layer from attaching to the jig.

The preforming is preferably done by vacuum forming. In addition, the preformed coating sheet may be attached to the object to be coated after the support layer has been removed.

Here, the vacuum forming is preferably TOM forming. TOM is a "Three Dimension Overlay Method," and when TOM forming is applied, the coating sheet can be formed even along the shape of an object to be coated with an intricately shaped surface.

A schematic view of a device to perform TOM forming is shown in Fig. 4. The coating sheet 10 is set inside a TOM forming device 30, with an upper box 31 provided above the coating sheet 10 and a lower box 32 provided below the coating sheet 10. In the lower box 32, the object to be coated 20 is placed on a vertical lifting table 35. The object to be coated 20 may be made of any material and may be formed by a resin material or by a metal. In the coating sheet 10, the coating layer is placed on the bottom and the transfer layer on the top.

In this way, the upper box 31 and the lower box 32 are depressurized and the coating sheet 10 is heated by a near-infrared heater or the like. Next, the object to be coated 20 is raised by the vertical lifting table 35, the object to be coated 20 and coating sheet 10 are pressed together, and then compressed air is introduced only into the upper box 31 and held for a certain period of time to laminate the coating sheet 10 on the surface of the object to be coated 20. Of course, a vacuum forming other than TOM forming may also be applied.

The formed coating sheet 10 may be so-called trimmed, i.e., unnecessary portions may be cut as appropriate.

Next, the transfer layer should be peeled off and the coating layer should be thermally cured. The method for thermally curing is not particularly limited, but the heating temperature is, for example, 135°C or more and 170°C or less, and preferably 140°C or more and 160°C or less. The heating time is, for example, 30 minutes or more and 90 minutes or less, and preferably 60 minutes or more and 90 minutes or less.

This allows to cure the coating layer. The coating layer has high hardness and excellent wear resistance after being cured.

### Examples

Hereinafter, the present invention will be further described in detail by Examples, but the present invention is not limited by these Examples in any way.

The evaluations and tests in the Examples are as follows.

### <Indentation modulus>

The indentation modulus of the coating layer was measured by the nanoindentation method as follows.

The coating sheets prepared in each Example and Comparative Example were attached to a baked coating plate by TOM forming. The attachment was performed so that the pigment layer side of the coating sheet be in contact with the surface of the baked coating plate. After peeling off the transfer layer, the baked coating sheet on which the coating sheet was attached was cured in an oven at 160°C for 1 hour. A Berkovich indenter was mounted on a nanoindenter ("ENT-NEXUS" manufactured by ELIONIX INC.), and the indenter was pressed into the surface of the coating layer of the cured coating sheet for 10 seconds at a load of 50 mN, then held at 50 mN for 5 seconds. It was then unloaded over a period of 10 seconds and the indentation modulus was measured. The indentation modulus was measured at room temperature (25°C).

### <Tensile elongation at break>

The tensile elongations at break in MD and TD at 100°C of the coating sheet were measured by a measurement method in accordance with JIS K7127. Specifically, the coating sheet was cut into a dumbbell shape with a width of 10 mm and a gauge width of 40 mm, and pulled at a tensile speed of 500 mm/min by a tensile tester. The tensile elongation at break was calculated from the displacement at the point where the coating sheet broke, using the following equation.

The jig width was the same as the gauge width. The measurement temperature was set at 100°C.

Tensile elongation at break (%) = {[(gauge width at break) - (gauge width before test)] / (gauge width before test)} x 100

### <Vacuum formability (1)>

Using a vacuum forming machine ("NGF-0709-S" manufactured by Fu-se Vacuum Forming), a 21 cm x 30 cm coating sheet was heated to 100°C under vacuum and then vacuum-formed. The vacuum formability was evaluated according to the following evaluation criteria.
A: The shape conformability to the adherend was good, and neither wrinkling nor uneven coloring occurred.
B: The shape conformability to the adherend was good, but wrinkling or uneven coloring occurred.
C: The shape conformability to the adherend was poor, and the coating sheet broke.

### <Vacuum formability (2)>

Using an "NGF-0709-S" manufactured by Fu-se Vacuum Forming, a 50 cm x 50 cm coating sheet was heated to 100°C under vacuum and then vacuum-formed. The vacuum formability was evaluated according to the following evaluation criteria.
A: The shape conformability to the adherend was good, and neither wrinkling nor uneven coloring occurred.
B: The shape conformability to the adherend was good, but wrinkling or uneven coloring occurred.
C: The shape conformability to the adherend was poor, and the coating sheet broke.

### <Wear resistance>

The wear resistance was measured by the ball-on-disk method. The coating sheets prepared in each Example and Comparative Example were attached to a baked coating plate by TOM forming. The attachment was performed so that the pigment layer side of the coating sheet be in contact with the surface of the baked coating plate. After peeling off the transfer layer, the baked coating sheet on which the coating sheet was attached was cured in an oven at 160°C for 1 hour to form a coating. Using a friction player FPR2200 manufactured by RHESCA CO., LTD., the coating film prepared using the coating sheet of the present invention was set on the measuring device, and measured using 5 mm diameter zirconia balls as the test specimen mating material and with a load: 1.0 kgf, rotation speed: 100 rpm, radius: 2 mm, and temperature: 25°C as the test conditions. The wear resistance was evaluated according to the following evaluation criteria.
A: Neither cratering nor chipping of the coating film occurred.
B: Cratering of the coating film occurred.
C: Chipping of the coating film occurred.

Each of the components used in the Examples and Comparative Examples and the films used for the transfer layer are as follows.
Transfer layer A: non-stretched cyclic polyolefin film ("Decofit Q16CK" manufactured by Toray Industries, thickness: 100 µm, 25°C Young's modulus: 130 MPa)
Transfer layer B: non-stretched polyethylene film ("LIX Film L4103" manufactured by CAST FILM JAPAN, thickness: 70 µm, 25°C Young's modulus: 110 MPa)
Transfer layer C: non-stretched polyethylene film ("TORETEC 7461" manufactured by Toray Industries, thickness: 70 µm, 25°C Young's modulus: 200 MPa)
Transfer layer D: non-stretched polyethylene film ("T.U.X VCS" manufactured by Mitsui Chemicals Tohcello, thickness: 50 µm, 25°C Young's modulus: 65 MPa)
Transfer layer E: non-stretched multilayer polyolefin film ("Convenience store PP" manufactured by Okamoto Industries, thickness: 100 µm, 25°C Young's modulus: 195 MPa)
Transfer layer F: non-stretched multilayer polyolefin film ("Convenience store PE" manufactured by Okamoto Industries, thickness: 100 µm, 25°C Young's modulus: 95 MPa)

### <(Meth)acrylic resin>

The acrylic polyols used were as listed in Table 1 below.

**Table 1**

| | NV (%) | Tg (°C) | Hydroxyl value (mgKOH/g) | Mw | Solvent |
|---|---|---|---|---|---|
| Acrylic polyol (1) | 40.5 | 50 | 37 | 130,000 | Ethyl acetate |
| Acrylic polyol (2) | 51 | 24 | 58.8 | 46,000 | Ethyl acetate |
| Acrylic polyol (3) | 23.3 | 40 | 80 | 250,000 | Ethyl acetate |
| Acrylic polyol (4) | 40.4 | 40 | 150 | 50,000 | Ethyl acetate |
| Acrylic polyol (5) | 35.7 | 50 | 150 | 91,000 | Ethyl acetate |
| Acrylic polyol (6) | 32.7 | 40 | 150 | 156,000 | Ethyl acetate |
| Acrylic polyol (7) | 100 | -50 | 120 | 2,500 | - |

In Table 1, NV means the solid content, and specifically the mass percent of the acrylic polyol component.

### <Blocked isocyanate (B)>

Hexamethylene diisocyanate blocked isocyanate (HDI-based), "Takenate B-882N" manufactured by Mitsui Chemicals, blocking agent type: oxime-based, NV = 70%, solvent: ethyl acetate, high-boiling aromatic solvent S 100, containing a small amount of urethanization catalyst

### <Pigment (C)>

Pigment dispersion "NSP-UP 841B" manufactured by NIKKO BICS, pigment type: carbon black, NV = 9%

### <Glitter material (D)>

Glitter material "Xirallic T60-10 WNT Crystal Silver" manufactured by Merck, material in which at least one layer of metal oxide including titanium dioxide is coated on alumina flakes.

Table 2 below shows the compositions of the thermosetting resin compositions for forming each pigment layer (thermosetting resin compositions (Y)) and of the thermosetting resin compositions for forming each clear layer (thermosetting resin compositions (X)).

**Table 2**

| | | | Pigment layer A | Pigment layer B | Pigment layer C | Clear layer A | Clear layer B | Clear layer C | Clear layer D | Clear layer E |
|---|---|---|---|---|---|---|---|---|---|---|
| | Acrylic polyol | Acrylic polyol (1) | 57 | | | | | | | |
| | | Acrylic polyol (2) | | 49 | | | | | | 77 |
| | | Acrylic polyol (3) | | | 66 | 84 | | | | |
| | | Acrylic polyol (4) | | | | | 62 | | | |
| Thermosetting resin composition (pts. by mass) | | Acrylic polyol (5) | | | | | | 65 | | |
| | | Acrylic polyol (6) | | | | | | | 67 | |
| | | Acrylic polyol (7) | 16 | 17 | 10 | | | | | |
| | Blocked isocyanate | Takenate B-882N | 27 | 34 | 24 | 16 | 38 | 35 | 33 | 23 |
| | Pigment | NSP-UP 841B | 16 | 18 | 12 | | | | | |
| | Glitter material | Xirallic T60-10 WNT Crystal Silver | 1.7 | 2 | 1.3 | | | | | |

### [Example 1]

In Example 1, a coating sheet was prepared using the "Transfer layer A" as the transfer layer, the "Clear layer C" as the thermosetting resin composition for forming the clear layer, and the "Pigment layer A" as the thermosetting resin composition for forming the pigment layer, as shown in Table 3. Specifically, the coating sheet was prepared as follows.

A thermosetting resin composition (Clear layer C) was coated on the surface of the Transfer layer A using an applicator, and then a pre-drying step was performed at a drying temperature of 60°C and a drying time of 30 minutes, followed by a main drying step at a drying temperature of 90°C and a drying time of 30 minutes to form a 30 µm thick clear layer on the transfer layer and obtain a laminated body of the transfer layer/clear layer.

Separately, a mold release PET film was prepared and a thermosetting resin composition (Pigment layer A) was coated on the surface of the mold release PET film using an applicator. A pre-drying step was then performed at a drying temperature of 60°C and a drying time of 30 minutes, followed by a main drying step at a drying temperature of 90°C and a drying time of 30 minutes to form a 20 µm thick pigment layer on the mold release PET film.

The above pigment layer was peeled off from the mold release PET film, and then laminated on the surface of the clear layer of the above laminated body of the transfer layer/clear layer, followed by subjecting to lamination at 25°C to prepare a coating sheet in which the transfer layer, clear layer, and pigment layer were laminated in this order. The obtained coating sheet was used to perform the evaluations and tests described above.

### [Examples 2 to 6 and Comparative Examples 1 and 2]

The coating sheets were prepared in the same manner as in Example 1 except that the thermosetting resin compositions for forming the transfer layer and clear layer, and the thermosetting resin composition for forming the pigment layer were changed as described in Table 3. The obtained coating sheets were used to perform the evaluations and tests described above.

### [Examples 7 and 8]

The coating sheets were prepared in the same manner as in Example 1, except that the transfer layers E and F were used, and the main drying step (drying temperature: 90°C, 30 min) was not performed. The obtained coating sheets were used to perform the evaluations and tests described above.

### [Comparative Example 3]

A sample of the coating sheet prepared in Example 1 with the transfer layer peeled off was used to perform the evaluations and tests described above.

**Table 3**

| | | Exampl e 1 | Exampl e 2 | Exampl e 3 | Exampl e 4 | Exampl e 5 | Exampl e 6 | Exampl e 7 | Exampl e 8 | Comparativ e Example 1 | Comparativ e Example 2 | Comparativ e Example 3 |
|---|---|---|---|---|---|---|---|---|---|---|---|---|
| Transfer layer | | A | A | A | A | B | C | E | F | D | A | - |
| Coating layer | Clear layer | C | D | B | A | D | D | C | C | C | E | C |
| | Pigment layer | A | A | B | C | A | A | A | A | A | B | A |
| Evaluatio n | Indentatio n modulus (GPa) | 3.2 | 3.5 | 2.0 | 2.7 | 3.5 | 3.5 | 3.2 | 3.2 | 3.2 | 1.8 | 3.2 |
| | 100°C tensile elongation at break (%) MD | 390 | 420 | 315 | 470 | 70 | 700 | 1100 | 850 | 50 | 345 | 470 |
| | 100°C tensile elongation at break (%) TD | 400 | 430 | 325 | 485 | 85 | 700 | 1200 | 950 | 65 | 350 | 465 |
| | Vacuum formabilit y (1) | A | A | B | A | A | B | B | B | C | A | A |
| | Vacuum formabilit y (2) | A | A | B | A | A | B | B | B | C | A | C |
| | Wear resistance | A | A | B | A | A | A | A | A | A | C | A |

Good results in vacuum formability and wear resistance were obtained for the coating sheets of each Example that satisfied the prescribed requirements of the present invention.

By contrast, the coating sheet of Comparative Example 1, which had a low tensile elongation at break at 100°C, showed poor results for vacuum formability. The coating sheet of Comparative Example 2, whose coating layer had a low indentation modulus after curing, showed poor results for wear resistance. The coating sheet of Comparative Example 3, which does not include a transfer layer, showed poor results for vacuum formability.

### Reference Signs List

10 Coating sheet
11 Coating layer
11a Clear layer
11b Pigment layer
12 Transfer layer
14 Support layer
20 Object to be coated
30 TOM forming device
31 Upper box
32 Lower box
35 Vertical lifting table

## Claims

1. A coating sheet, comprising a transfer layer and a coating layer comprising a thermosetting resin composition,
the coating layer having an indentation modulus obtained by nanoindentation method upon thermally curing at 160°C for 1 hour of 2.0 GPa or more and 3.5 GPa or less, and
the coating sheet having tensile elongations at break in MD and TD at 100°C of 70% or more and 1,500% or less.

2. The coating sheet according to claim 1, wherein the thermosetting resin composition comprises a (meth)acrylic resin (A) and a blocked isocyanate (B).

3. The coating sheet according to claim 2, wherein the (meth)acrylic resin (A) comprises a (meth)acrylic resin that has a weight-average molecular weight of 50,000 or more and 1,000,000 or less, is in solid form, and has a plurality of functional groups.

4. The coating sheet according to claim 2, wherein the (meth)acrylic resin (A) is a (meth)acrylic polyol.

5. The coating sheet according to claim 1, wherein the coating layer comprises a clear layer and a pigment layer.

6. A method for forming a coating, wherein the coating sheet according to claim 1 or 2 is attached to an object to be coated and then the coating layer is cured to form the coating.

7. The method for forming a coating according to claim 6, wherein the transfer layer is peeled off from the coating layer to remove the transfer layer from the object to be coated.
